(19) Europäisches Patentamt

European Patent Office

Office européen des brevets

(11) Veröffentlichungsnummer: **0 481 027 B1**

(12) **EUROPÄISCHE PATENTSCHRIFT**

(45) Veröffentlichungstag der Patentschrift: **31.05.95**

(21) Anmeldenummer: **91906920.3**

(22) Anmeldetag: **21.03.91**

(51) Int. Cl.⁶: **B60T 17/22**

(86) Internationale Anmeldenummer:
**PCT/EP91/00545**

(87) Internationale Veröffentlichungsnummer:
**WO 91/17073 (14.11.91 91/26)**

(54) **VERFAHREN ZUR UBERWACHUNG DES BREMSENTLÜFTUNGSZUSTANDS.**

(30) Priorität: **04.05.90 DE 4014314**

(43) Veröffentlichungstag der Anmeldung:
**22.04.92 Patentblatt 92/17**

(45) Bekanntmachung des Hinweises auf die
Patenterteilung:
**31.05.95 Patentblatt 95/22**

(84) Benannte Vertragsstaaten:
**CH DE FR GB IT LI SE**

(56) Entgegenhaltungen:
**EP-A- 0 066 388**
**WO-A-90/02066**
**DE-A- 2 917 157**
**US-A- 3 975 706**

(73) Patentinhaber: **ROBERT BOSCH GMBH**
**Postfach 30 02 20**
**D-70442 Stuttgart (DE)**

(72) Erfinder: **SCHMIDT, Günther**
**Backnanger Str. 13**
**D-7146 Tamm (DE)**
Erfinder: **WILLMANN, Karl-Heinz**
**Arndtstr. 45**
**D-7149 Freiberg (DE)**

## Beschreibung

### Stand der Technik

Z.B. bei ABS/ASR-Systemen mit elektronischer Bremskraftverteilung hat der Fahrer keinen Anhaltspunkt für schlecht entlüftete Bremsen, der Hinterachse z.B. durch lange Pedaldurchfallwege, da bei jedem Bremsvorgang der Hauptbremszylinder von der Radbremse über ein Magnetventil entkoppelt wird und der Bremsdruck über eine separate Druckversorgung bestehend aus Druckquelle und Magnetventile eingesteuert wird.

Da somit ein sogenannter schlummernder Fehler vorliegt, der bei einem Vorderachskreisausfall zu einem nahezu drucklosen Fahrzeug führen kann, muß die Hinterachsbremse über eine zusätzliche Maßnahme z.B. einen elektrischen Schalter am Plungerkolben überwacht werden, was das System verteuert.

Bei der sogenannten elektrischen Bremse treten ähnliche Probleme auf.

Das Dokument WO 90/02066 beschreibt mehrere Verfahren zur Überwachung von geregelten hydraulischen Bremsanlagen durch die Erfassung von Rad- und Fahrzeugdaten.

### Vorteile der Erfindung

Bei der Erfindung wird von Zeit zu Zeit ein Test durchgeführt, um zu prüfen, ob die Bremse entlüftet ist. Hierzu wird Druck an den betroffenen Bremsen eingesteuert und über eine Temperatur- und eine Druckbestimmung auf den Entlüftungszustand geschlossen. Wie in den Unteransprüchen gezeigt ist, kann die Temperaturbestimmung in sehr einfacher Weise erfolgen und für die Druckmessung kann ein sowieso schon vorgesehener Druckgeber verwendet werden. Hierdurch ergibt sich eine wirksame, jedoch billig realisierbare Überwachungsmöglichkeit. Der Test kann im Fahrzeugstillstand, aber auch bei Fahrt während der normalen Bremsfunktion erfolgen.

### Figurenbeschreibung

Anhand der Zeichnung werden Ausführungsbeispiele der Erfindung erläutert. Es zeigen
Fig. 1 ein Blockschaltbild,
Fig. 2-4 Diagramme

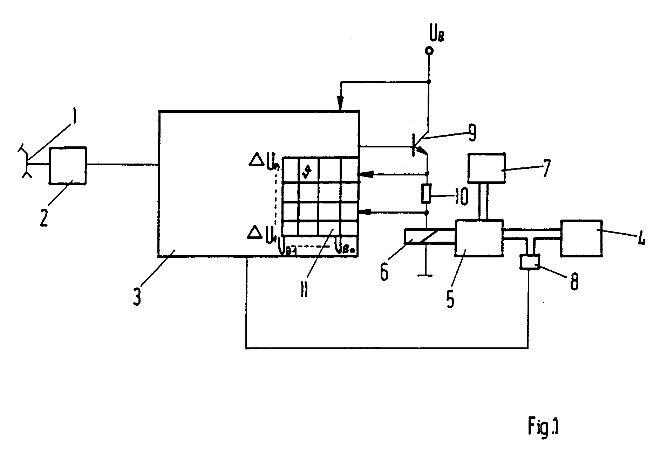

In Fig. 1 ist mit 1 ein Bremsbedal bezeichnet, mit dem beim Bremsen ein Solldrucksignalgeber 2 betätigt wird. Dieser liefert ein entsprechendes Signal an ein Steuergerät 3. An einer Bremse 4 wird über ein Magnetventil 5 mit Wicklung 6 der nahezu konstante Druck einer Druckquelle 7 eingesteuert. Ein Druckmesser 8 mißt den eingesteuerten Druck und liefert ein Druckistsignal zum Steuergerät 3. Ist der Solldruck erreicht, so verhindert das Steuergerät 3 eine weitere Ansteuerung der Wicklung 6 des Magnetventils 5/6 über einen Transistor 9 zu dem noch ein Meßwiderstand 10 in Reihe liegt. Im Steuergerät 3 sind in einem Speicher meßtechnisch ermittelte Werte matrixförmig (Matrix 11) abgelegt.

Zur Überprüfung des Entlüftungszustands der Bremse 4 steuert von Zeit zu Zeit das Steuergerät 3 den Transistor 9 für eine vorgegebene Zeit an. Hierbei wird die am Meßwiderstand 10 abfallende Spannung $\Delta U$ gemessen. Diese errechnet sich zu: $\Delta U = R_m \cdot I$, wobei $R_m$ der Wert des Meßwiderstands und I der Ventilstrom ist.

Der Strom I ermittelt sich aus der angegebenen Schaltung zu:

$$I = \frac{U_{Bat} - U_{CE}}{R_{MV} + R_m} ,$$

wobei $U_{CE}$ die an der Kollektor-Emitterstrecke abfallende Spannung und $R_{MV}$ der Spulenwiderstand ist.

Die Größen $U_{Bat}$, $U_{CE}$ und $R_m$ sind im Steuergerät bekannt, bzw. von ihm gemessen worden. Der Widerstand $R_{MV}$ des Magnetventils ist temperaturabhängig und folgt der Gesetzmäßigkeit:

$$R_{MV\delta} = R_{MV,20°C} (1 + \alpha (\delta - 20°C)$$

wobei $R_{MV,20°C}$ und $\alpha$ bekannt sind. Somit kann aus der $\Delta U$-Messung am Meßwiderstand hinreichend genau auf die Temperatur $\delta$ am Magnetventil geschlossen werden, und zwar durch Auslesen einer Matrix". Die Matrixelemente $\delta_{ij}$ sind schaltgeräte- und magnetventilspezifisch vorher in Abhängigkeit von $\Delta U$ und der Batteriespannung $U_{Bat}$ ermittelt und in die Matrix eingeschrieben worden.

Wenn nun die Temperatur am Magnetventil bekannt ist, so ist diese näherungsweise auch die Temperatur der Bremsflüssigkeit, in der Umgebung des Ventils über deren Strömungsverhalten, bzw. Zähigkeit nun eine Aussage gemacht werden kann.

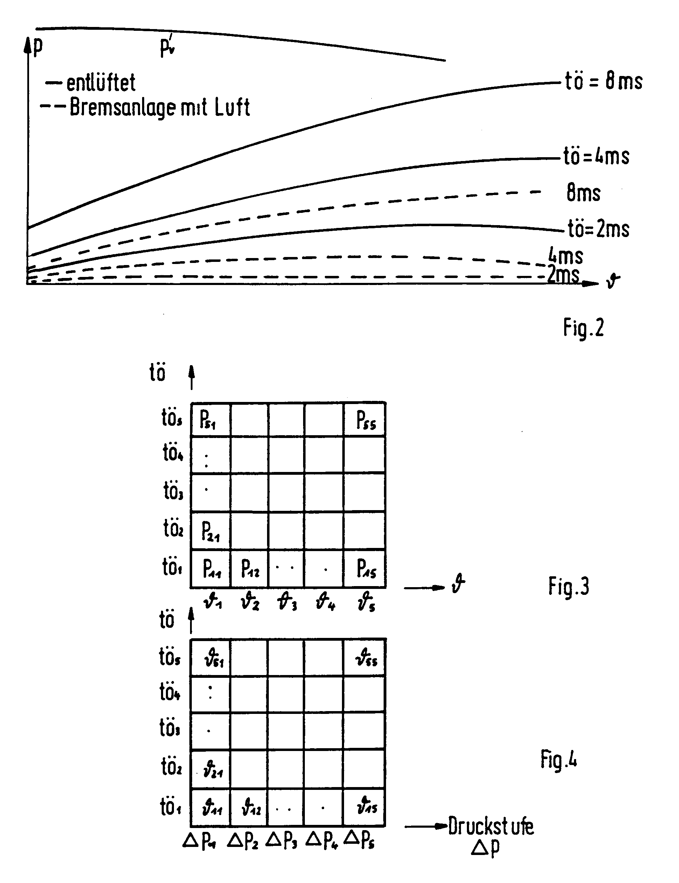

Wird die Bremsanlage bei konstantem Druck der Druckquelle über das Magnetventil während einer bestimmten Öffnungsdauer $t_ö$ befüllt, so werden sich in der Radbremse Druckverläufe entsprechend Fig. 2 einstellen, die von der Temperatur $\delta$ und den Ventilöffnungszeiten $t_ö$ abhängig sind, wobei die ausgezogenen Kurven für entlüftete und die gestrichelten für schlecht entlüftete Bremsen gelten.

Bei bestimmter Öffnungszeit des MV und Vorliegen einer bestimmten Temperatur $\delta$, muß sich bei intakter, entlüfteter Bremsanlage ein Mindestdruck P am Rad einstellen. Wird dieser Druck nun vom Drucksensor 8 nicht gemessen, so liegt eine schlecht entlüftete Bremsanlage vor. Dieser Tatbestand wird dem Fahrer gemeldet, der dann eine Werkstatt aufsuchen muß. Die Auswertung kann auch hier mit Hilfe einer Matrix geschehen. Die Matrixelemente $P_{ij}$ sind nun die Mindestdrücke, die bei Vorliegen eines bestimmten $\delta$ und eines bestimmten $t_{\ddot{o}}$ gemessen werden müssen. Eine solche Matrix, die ebenfalls im Steuergerät untergebracht ist, zeigt Fig. 3.

Wird nun die Bremsanlage (wie z.B. bei ABS) mit pulsförmigen Magnetventilstuersignalen befüllt (bei konstantem Vordruck), so ergeben sich qualitativ bei entlüfteter bzw. nicht entlüfteter Bremsanlage unterschiedliche Druckaufbauverläufe.

Wenn die Luft in der Bremsanlage erst einmal komprimiert ist, dann werden die Druckstufen $\Delta P$ bei entlüfteter bzw. nicht entlüfteter Bremsanlage gleich groß sein und bei vorgegebener Öffnungszeit $t_{\ddot{o}}$ nur noch von der Temperatur abhängen.

Dieses Verhalten kann zur Ermittlung der Temperatur am Magnetventil ausgenutzt werden, d.h. die oben angegebene Methode kann hierdurch ersetzt werden. Auch hier kann eine Matrixauswertung erfolgen. Eine Matrix ist in Fig. 4 gezeigt. Die Matrix gilt für Drücke ab einem Druck $p_{min}$ von z.B. 15 bar.

Matrixelemente sind Temperaturwerte $\delta_{ij}$ und sie sind in Abhängigkeit von der Höhe der Druckstufen $\Delta P_i$ und von Öffungszeiten $t_{\ddot{o}j}$ eingespeichert.

## Patentansprüche

1. Verfahren zur Überwachung des Entlüftungszustands von hydraulischen Bremsen eines Kraftfahrzeugs, bei denen der Bremsdruck über eine getrennte Hydraulik in den Radzylindern eingesteuert wird, dadurch gekennzeichnet, daß die Temperatur der Bremsflüssigkeit wenigstens näherungsweise bestimmt wird, daß über ein Ventil in der Hydraulik während einer vorgegebenen Öffnungszeit Druck eingesteuert wird, daß dieser Druck bestimmt wird, daß der gemessene Druck mit einem von einer Vielzahl gespeicherter Solldruckwerte verglichen wird, der der ermittelten Temperatur und der vorgegebenen Öffnungszeit zugeordnet ist, und daß bei Abweichen des Istwerts vom Sollwert in wenigstens vorgegebener Weise eine Warnung durchgeführt wird.

2. Verfahren nach Anspruch 1, dadurch gekennzeichnet, daß die Solldruckwerte in Form einer Kennlinie in Abhängigkeit von der Temperatur abgelegt werden.

3. Verfahren nach Anspruch 1, dadurch gekennzeichnet, daß die Solldruckwerte in Form einer Matrix in Abhängigkeit von der Temperatur und gegebenenfalls mehreren Öffnungszeiten abgelegt sind.

4. Verfahren nach einem der Ansprüche 1 bis 3, dadurch gekennzeichnet, daß die Temperatur der Bremsflüssigkeit durch Bestimmen des Spannungsabfalls $\Delta U$ an einem in Reihe zur Ventilwicklung liegenden Meßwiderstand und Aufsuchen des zugehörigen von einer Vielzahl von in Abhängigkeit vom Spannungsabfall $\Delta K$ eingespeicherten Temperaturwerten erfolgt.

5. Verfahren nach Anspruch 4, dadurch gekennzeichnet, daß die Temperaturwerte 6 in Form einer Kennlinie $\delta = f_{(\Delta U)}$ abgelegt sind.

6. Verfahren nach Anspruch 4, dadurch gekennzeichnet, daß die Temperaturwerte $\delta$ in Form einer Matrix in Abhängigkeit von dem Spannungsabfall $\Delta U$ und gegebenenfalls von der Batteriespannung abgelegt ist.

7. Verfahren nach einem der Ansprüche 1 bis 3, dadurch gekennzeichnet, daß bei gepulstem Druckaufbau die Höhe der Druckstufen bei vorgegebener Öffnungszeit des Ventils bestimmt und der zugehörige von einer Vielzahl von in Abhängigkeit von der Höhe der Druckstufen abgespeicherten Temperaturwerten aufgesucht wird.

8. Verfahren nach Anspruch 7, dadurch gekennzeichnet, daß die Temperaturwerte in Form einer Kennlinie abgelegt sind.

9. Verfahren nach Anspruch 7, dadurch gekennzeichnet, daß die Temperaturwerte in Form einer Matrix in Abhängigkeit von der Höhe der Druckstufen und gegebenenfalls in Abhängigkeit von verschiedenen Ventilöffnungszeiten abgespeichert wird.

## Claims

1. Method for monitoring the state of bleeding of hydraulic brakes of a motor vehicle in which the brake pressure is applied to the wheel cylinders via separate hydraulics, characterized in that the temperature of the brake fluid is at least approximately determined, in that pressure is applied via a valve in the hydraulics during a prescribed opening time, in that this pressure is determined, in that the measured pressure is compared with one of a plurality of stored set pressure values which is assigned to the determined temperature and to the prescribed opening time, and in that a warning is carried out when the actual value deviates from the set value in at least a prescribed manner.

2. Method according to Claim 1, characterized in that the set pressure values are stored in the form of a characteristic curve as a function of the temperature.

3. Method according to Claim 1, characterized in that the set pressure values are stored in the form of a matrix as a function of the temperature and, if appropriate, of a plurality of opening times.

4. Method according to one of Claims 1 to 3, characterized in that the temperature of the brake fluid is determined by determining the drop in voltage $\Delta U$ at a measuring resistor located in series with the valve winding and by finding the associated temperature value from a plurality of temperature values stored as a function of the voltage drop $\Delta K$.

5. Method according to Claim 4, characterized in that the temperature values $\delta$ are stored in the form of a characteristic curve $\delta = f_{(\Delta U)}$.

6. Method according to Claim 4, characterized in that the temperature values $\delta$ are stored in the form of a matrix as a function of the voltage drop $\Delta U$ and, if appropriate, of the battery voltage.

7. Method according to one of Claims 1 to 3, characterized in that when there is a pulsed increase in pressure the pressure levels are determined with a prescribed opening time of the valve and the associated temperature value of a plurality of temperature values stored as a function of the pressure levels is found.

8. Method according to Claim 7, characterized in that the temperature values are stored in the form of a characteristic curve.

9. Method according to Claim 7, characterized in that the temperature values are stored in the form of a matrix as a function of the pressure levels and, if appropriate, as a function of various valve opening times.

**Revendications**

1. Procédé de contrôle de l'état de purge de freins hydrauliques d'un véhicule automobile, selon lequel on induit la pression de frein dans les cylindres de roue par un circuit hydraulique distinct, caractérisé en ce qu'on détermine au moins approximativement la température du liquide de frein, on induit la pression par une vanne dans le circuit hydraulique, pendant un temps d'ouverture prédéterminé, on détermine cette pression, on compare la pression mesurée à un grand nombre de pressions de consigne enregistrées, pression qui est associée à la température obtenue et au temps d'ouverture prédéterminé, et en ce qu'en cas de différence entre la valeur réelle et la valeur de consigne, on émet un signal avertisseur d'au moins une manière prédéterminée.

2. Procédé selon la revendication 1, caractérisé en ce que les valeurs de la pression de consigne sont enregistrées sous la forme d'une courbe caractéristique en fonction de la température.

3. Procédé selon la revendication 1, caractérisé en ce que les valeurs de la pression de consigne sont enregistrées sous la forme d'une matrice en fonction de la température et le cas échéant en fonction de plusieurs temps d'ouverture.

4. Procédé selon l'une des revendications 1 à 3, caractérisé en ce qu'on obtient la température du liquide de frein en déterminant la chute de tension $\Delta U$ sur une résistance de mesure en série sur l'enroulement de l'électrovanne et on recherche la valeur correspondante à partir d'un grand nombre de valeurs de température enregistrées en fonction de la chute de tension $\Delta U$.

5. Procédé selon la revendication 4, caractérisé en ce que les valeurs de température $\delta$ sont enregistrées sous la forme d'une courbe caractéristique $\delta = f_{(\Delta U)}$.

6. Procédé selon la revendication 4, caractérisé en ce que les valeurs de température $\delta$ sont enregistrées sous la forme d'une matrice en fonction de la chute de tension $\Delta U$ et le cas échéant en fonction de la tension de la batterie.

7. Procédé selon l'une des revendications 1 à 3, caractérisé en ce que pour une montée en pression impulsionnelle, on détermine l'amplitude des niveaux de pression pour un temps d'ouverture prédéterminé de l'électrovanne et on recherche la température correspondante parmi un grand nombre de températures enregistrées en fonction du niveau des pressions.

8. Procédé selon la revendication 7, caractérisé en ce que les valeurs de température sont enregistrées sous la forme d'une courbe caractéristique.

9. Procédé selon la revendication 7, caractérisé en ce que les valeurs de température sont enregistrées sous la forme d'une matrice en fonction des niveaux de pression et le cas échéant en fonction des différents temps d'ouverture de la vanne.

Fig.1

Fig. 2

Fig. 3

Fig. 4